# EUROPEAN PATENT SPECIFICATION

(11) **EP 2 756 994 B1**
(45) Date of publication and mention of the grant of the patent: **21.10.2015**
(21) Application number: 13151471.3
(22) Date of filing: 16.01.2013
(51) Int. Cl.: B60R 13/02

(54) **Method for assembling a trim part to a supporting part of a vehicle**
Verfahren zum Montieren eines Verkleidungsteiles an ein Befestiungsteil eines Fahrzeugs
Procédé d'assemblage d'une pièce de garnissage sur une partie de support d'un véhicule

(43) Date of publication of application: 23.07.2014
(73) Proprietor: Ford Global Technologies, LLC, Dearborn, MI 48126 (US)
(72) Inventor: Sayan, Övgü, Kurtköy-Pendik/Istanbul (TR); Colakel, Didem, Maltepe Girne (TR); Polat, Aycin, Kartepe/Kocaeli (TR)
(74) Representative: Drömer, Hans-Carsten

(56) References cited:
- EP-A1- 1 209 370
- JP-A- S62 152 945

## Description

The present invention relates to a method for assembling a trim part to a supporting part of a vehicle, wherein the trim part has an outer surface and an inner surface opposing the outer surface and is fixable to the supporting part by fixing means provided on the inner surface, a fixing connection being established by engaging the fixing means with counter means provided on the supporting part.

Due to technical and aesthetic reasons, trim parts are fixed to any kind of support parts of the vehicle by fixing means that are provided only on one surface of the trim part, for example the inner surface without leaving any marks on the other surface, i.e., the outer surface. The method known in the art comprises following steps for establishing a fixing connection between the trim part and the support part:
- aligning the trim part and the supporting part such that the fixing means and the counter means can be engaged to each other, and
- engaging the fixing means with the counter means by applying force to the outer surface of trim part.

Since the fixing means do not leave any marks on the outer surface on which the force is applied, following problem arises: Upon assembly the operator is facing the outer surface opposing the inner surface of the trim part. Since the trim parts are often plane and relatively big, the fixing means are almost invisible to the operator. As a result, the operator does not know the exact position of the fixing means when he is applying the force to the outer surface in order to engage the fixing means and the counter means with each other. Trim parts are often made of thin material. In many cases cavities are formed between the trim parts and the support parts. When the operator is applying force within a region of the outer surface of the trim part that is at distance from the position of the fixing means, the trim part is prone to fade and deformation which results in a damage of the outer surface. This deformation of the trim part decreases the quality and is a reason for rejections. The replacement of defect trim parts is time consuming and costly.

The US 5 117 549 discloses a method for fastening an interior trim part to a vehicle door by using adhesive beads and fasteners. However, the fasteners do not leave any marks on the outer surface and thus, the position of the fasteners is difficult to estimate when fastening the interior trim part to the vehicle door.

JPS 62 152 945 describes a method for assembling a trim part to a supporting part of a vehicle according to the preamble of claim 1, wherein the trim part is fixable to the supporting part by a magnet provided on a chenille. Since the trim part is directly mounted on the support part and thus no cavities between the support part and the trim part there is no danger of deforming the trim part upon assembly.

EP 1 209 370 A1 discloses a method for assembling a trim part to a supporting part of a vehicle, wherein the trim part is fixable to the supporting part by a clamp that can be activated by a head. The head is located in a hole of the trim part.

It is therefore an object of the present invention to further develop the method initially presented such that the drawbacks of that method are at least reduced. In particular, a method is presented that enables the estimation of the position of the fixing means when looking on the outer surface of the trim part upon assembly.

The problem is solved by a method as initially presented, comprising the step of fastening an indicator on the outer surface for indicating the position of the fixing means. The indicator shows the operator where he can apply force without the risk of deforming the trim part. The position of the indicator on the outer surface is in projection of the fixing means. The indicators may be positioned during the manufacturing process of the trim part itself or afterwards, e.g., by applying a positioning device onto the trim part that indicates the positions in which the indicator has to be placed. The indicators may be positioned by the supplier of the trim part or the manufacturing team. The operator is facing the outer surface of the trim part upon assembly and thus knows where to put his hands or a tool for applying the force needed to engage the fixing means with the counter means. The amount of trim parts that are deformed during the assembly is significantly reduced thereby enhancing the average quality of the vehicles without significant additional costs and effort.

The inventive method further comprises the step of removing the indicator after having established the fixing connection. On one hand the indicator may disturb forthcoming assembly steps or just disturb the impression the finished vehicle is exerting to the public and in particular the customer. On the other hand the indicators removed immediately after the fixing connection is established can be collected and re-used for another trim part that needs to be fixed to a support part. Thus, the raw material that is needed can be reduced thereby enhancing the sustainability of the present method.

In a preferred embodiment of the inventive method the step of fastening the indicator on the outer surface comprises the use of electrostatic interactions between the indicator and the outer surface. An alternative method to fasten the indicator on the outer surface may include the use of an adhesive agent. However, the adhesive agent is increasing the costs to the assembling process which is not desirable. Moreover, indicators fastened by adhesive agents leave unpleasant marks upon removal from the surface. These marks have to be removed by an additional step that is time consuming and costly as it often involves the use of a solvent or thinner that may even be hazardous to health. All of these disadvantages can be circumvented when electrostatic interactions are used for fastening the indicator on the outer surface.

Another aspect of the present invention is the use of an indicator on the outer surface of a trim part wherein the trim part has an outer surface and an inner surface opposing the outer surface and is fixable to a supporting part by fixing means provided on the inner surface, wherein the indicator is fastened to the outer surface for indicating the position of the fixing means and is removed after having established the fixed connection. The technical effects and advantages of the use of the indicator are the same as those that are discussed regarding the inventive method.

In the following the invention is explained in further detail by means of a preferred embodiment with reference to the accompanying drawings.

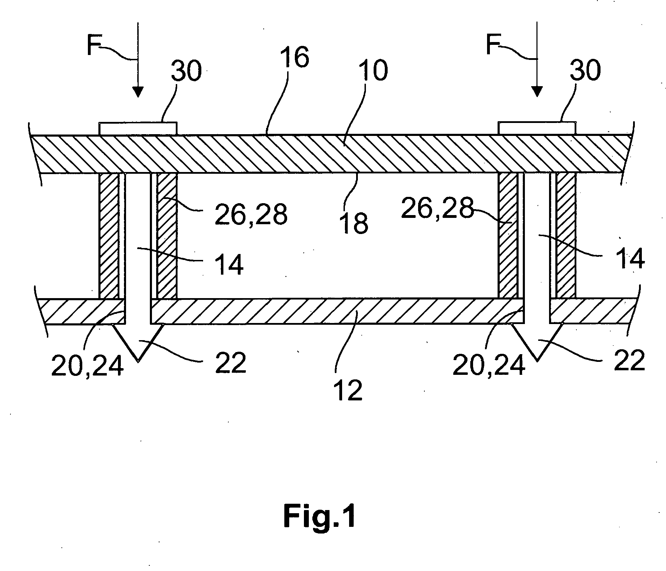

- Figure 1: is a sectional view through a trim part that is fastened to a support part, the trim part carrying an inventive indicator.

In Figure 1 a trim part 10 is fixed to a supporting part 12, in particular of a vehicle by fixing means 14. The trim part 10 comprises an outer surface 16 and an inner surface 18 wherein the fixing means 14 are provided on the inner surface 18 without leaving marks on the outer surface 16. The trim part 10 has a plane and thin shape such that the outer surface 16 is opposing the inner surface 18. In the embodiment shown in Figure 1, a fixing connection between the support part and the trim part 10 is established by engaging the fixing means 14 of the trim part 10 by counter means 20 of the supporting part 12. The fixing means 14 comprises a coned widening 22 made of a resilient material that can be introduced into the counter means 20 that are embodied as a through hole 24. The fixing connection is established as soon as the widening 22 is fully pushed through the through hole 24. In order to position the trim part 10 relative to the supporting part 12, a spacer 26 is arranged between the trim part 10 and the supporting part 12. In the embodiment shown in Figure 1 the spacer 26 is a hollow cylinder 28 arranged around the fixing means 14.

When fixing the trim part 10 to the supporting part 12, force must be applied to the outer surface 16 in order to push the coned widening 22 through the through hole 24. In Figure 1, the force is indicated by the arrows F. However, since the trim parts 10 are usually thin, plane and non-transparent parts the operator cannot estimate the position of the fixing means 14 since the operator is facing the outer surface 16 upon assembly. However, only when he is applying force within an area close to the fixing means 14 deformation of the trim part 10 is avoided. In order to mark this area, inventive indicators 30 are positioned in prolongation of the fixing means 14 on the outer surface 16 prior to assembly. Hence the operator knows where to apply force when assembling the trim parts 10 even though he is facing the outer surface 16 opposing the inner surface 18.

After the fixing connection between the trim part 10 and the supporting part 12 is established, the indicator 30 can be removed from the outer surface 16 and can be re-used for the assembly of another trim part 10.

### List of reference numbers

- 10: trim part
- 12: supporting part
- 14: fixing means
- 16: outer surface
- 18: inner surface
- 20: counter means
- 22: coned widening
- 24: through hole
- 26: spacer
- 28: hollow cylinder
- 30: indicator

- F: Force

## Claims

1. Method for assembling a trim part (10) to a supporting part (12) of a vehicle, wherein the trim part (10) has an outer surface (16) and an inner surface (18) opposing the outer surface (16) and is fixable to the supporting part (12) by fixing means (14) provided on the inner surface (18), a fixing connection being established by engaging the fixing means (14) with counter means (20) provided on the supporting part (12), the method comprising following steps:
- aligning the trim part (10) and the supporting part (12) such that the fixing means (14) and the counter means (20) can be engaged to each other,
- engaging the fixing means (14) with the counter means (20) by applying force to the outer surface (16) of trim part (10),
- fastening an indicator (30) on the outer surface (16) for indicating the position of the fixing means (14),
**characterized in** the step of removing the indicator (30) after having established the fixing connection.

2. Method according to claim 1, **characterized in that** the step of fastening the indicator (30) on the outer surface (16) comprises the use of electrostatic interactions between the indicator (30) and the outer surface (16).

3. Use of an indicator (30) on the outer surface (16) of a trim part (10) of a vehicle wherein the trim part (10) has an outer surface (16) and an inner surface (18) opposing the outer surface (16) and is fixable to a support-ing part (12) of a vehicle by fixing means (14) provided on the inner surface (18), wherein the indicator (30) is fastened to the outer surface (16) for indicating the position of the fixing means (14) and is removed after having established the fixed connection.

## Patentansprüche

1. Verfahren zum Montieren eines Verkleidungsteils (10) an ein Stützteil (12) eines Fahrzeugs, wobei das Verkleidungsteil (10) eine Außenfläche (16) und eine Innenfläche (18), die der Außenfläche (16) gegenüberliegt und durch auf der Innenfläche (18) vorgesehene Befestigungsmittel (14) an dem Stützteil (12) befestigt werden kann, aufweist, wobei eine Befestigungsverbindung durch Ineingriffbringen der Befestigungsmittel (14) mit an dem Stützteil (12) vorgesehenen Gegenmitteln (20) erzeugt wird, wobei das Verfahren die folgenden Schritte umfasst:
- Ausrichten des Verkleidungsteils (10) und des Stützteils (12) derart, dass die Befestigungsmittel (14) und die Gegenmittel (20) miteinander in Eingriff gebracht werden können,
- Ineingriffbringen der Befestigungsmittel (14) mit den Gegenmitteln (20) durch Anlegen einer Kraft an die Außenfläche (16) des Verkleidungsteils (10),
- Anbringen eines Indikators (30) an der Außenfläche (16) zum Anzeigen der Position der Befestigungsmittel (14),
**gekennzeichnet durch** den Schritt des Entfernens des Indikators (30), nachdem die Befestigungsverbindung erzeugt wurde.

2. Verfahren nach Anspruch 1, **dadurch gekennzeichnet, dass** der Schritt des Anbringens des Indikators (30) auf der Außenfläche (16) die Nutzung von elektrostatischen Wechselwirkungen zwischen dem Indikator (30) und der Außenfläche (16) umfasst.

3. Verwendung eines Indikators (30) auf der Außenfläche (16) eines Verkleidungsteils (10) eines Fahrzeugs, wobei das Verkleidungsteil (10) eine Außenfläche (16) und eine Innenfläche (18), die der Außenfläche (16) gegenüberliegt und durch auf der Innenfläche (18) vorgesehene Befestigungsmittel (14) an einem Stützteil (12) eines Fahrzeugs befestigt werden kann, aufweist, wobei der Indikator (30) zum Anzeigen der Position der Befestigungsmittel (14) an der Außenfläche (16) angebracht und, nachdem die Befestigungsverbindung erzeugt wurde, entfernt wird.

## Revendications

1. Procédé d'assemblage d'une partie de garniture (10) à une partie de support (12) d'un véhicule, la partie de garniture (10) comportant une surface extérieure (16) et une surface intérieure (18) opposée à la surface extérieure (16) et pouvant être fixée à la partie de support (12) par le biais de moyens de fixation (14) prévus sur la surface intérieure (18), une liaison de fixation étant établie en mettant les moyens de fixation (14) en prise avec des moyens correspondants (20) prévus sur la partie de support (12), le procédé comprenant les étapes suivantes :
- aligner la partie de garniture (10) et la partie de support (12) de telle sorte que les moyens de fixation (14) et les moyens correspondants (20) puissent être mis en prise l'un avec l'autre,
- mettre les moyens de fixation (14) en prise avec les moyens correspondants (20) en appliquant une force à la surface extérieure (16) de la partie de garniture (10),
- attacher un indicateur (30) sur la surface extérieure (16) afin d'indiquer la position des moyens de fixation (14),
**caractérisé par** l'étape de retrait de l'indicateur (30) après l'établissement de la liaison de fixation.

2. Procédé selon la revendication 1, **caractérisé en ce que** l'étape consistant à attacher l'indicateur (30) sur la surface extérieure (16) comprend l'utilisation d'interactions électrostatiques entre l'indicateur (30) et la surface extérieure (16).

3. Utilisation d'un indicateur (30) sur la surface extérieure (16) d'une partie de garniture (10) d'un véhicule, la partie de garniture (10) comportant une surface extérieure (16) et une surface intérieure (18) opposée à la surface extérieure (16) et pouvant être fixée à une partie de support (12) d'un véhicule par le biais de moyens de fixation (14) prévus sur la surface intérieure (18), l'indicateur (30) étant attaché à la surface extérieure (16) afin d'indiquer la position des moyens de fixation (14) et étant retiré après l'établissement de la liaison de fixation.
